# EUROPEAN PATENT APPLICATION

(11) **EP 4 485 898 A1**
(43) Date of publication of application: **01.01.2025**
(21) Application number: 22927732.2
(22) Date of filing: 24.02.2022
(51) Int. Cl.: H04L 65/403, H04W 76/45

(54) **CALL SYSTEM, HOST DEVICE, COMPUTER PROGRAM PRODUCT, MOBILE TERMINAL, AND CLOUD SERVER**

(71) Applicant: Shenzhen Hollyland Technology Co., Ltd., Shenzhen, Guangdong 518108 (CN)
(72) Inventor: LIU, Dezhi, Shenzhen, Guangdong 518108 (CN); ZHOU, Qiang, Shenzhen, Guangdong 518108 (CN)
(74) Representative: Bandpay & Greuter
(86) International application number: PCT/CN2022/077768
(87) International publication number: WO 2023/159446

(57) **Abstract**

The present invention provides a call system, a host device, a computer program product, a mobile terminal, and a cloud server. The call system (10) comprises a host device (11), a cloud server (12), and a plurality of clients (13). The host device (11) is configured to receive a first voice signal sent by a plurality of terminal devices (14), receive a second voice signal forwarded by the cloud server (12) and sent by the plurality of clients (13), perform audio mixing processing on the received first voice signal and the second voice signal, respectively generate a mixed audio signal corresponding to one of the terminal devices (14), send the mixed audio signal to the terminal device (14), generate a mixed audio signal corresponding to one of the clients (13), and forward the mixed audio signal to the client (13) by means of the cloud server (12). The call system may allow a user who is not within a coverage range of the wireless internal call system to access the call system for communication.

## Description

### TECHNICAL FIELD

The present disclosure relates to the field of communication technologies, and in particular to a call system, a host device, a computer program product, a mobile terminal and a cloud server.

### BACKGROUND

In scenarios such as film shooting, stage performances and large-scale activities, it is usually necessary to use a wireless intercom system to realize communication between staffs at an activity site, so as to complete the organization and scheduling of work. In general, the wireless intercom system includes a host device and a plurality of terminal devices (such as walkie-talkies or belt packs) which can be wirelessly connected to the host device. The terminal devices can transmit voice signals of users to the host device, and the host device can perform mixing processing on the received voice signals, that is, for each of the terminal devices, the voice signals transmitted by other terminal devices except for the terminal device are mixed and then forwarded to the terminal device. Since the host device and the terminal devices are usually connected wirelessly, and the wireless intercom system can only be applied in a small range because of a limited wireless communication distance, it is impossible to allow users outside the wireless communication coverage to access the wireless intercom system and communicate with the terminal devices in the wireless intercom system. In addition, since available wireless channel resources are usually limited, the number of terminal devices accessed in the wireless intercom system is also limited, and thus it is not suitable for scenarios that require many users to participate in the call.

### SUMMARY

Based on the above, embodiments of the present disclosure provide a call system, a host device, a computer program product, a mobile terminal and a cloud server.

According to a first aspect of the embodiments of the present disclosure, there is provided a call system, including a host device, a cloud server and a plurality of clients, wherein the host device and a plurality of terminal devices are in a same wireless access network, the host device and the clients respectively establish connection channels with the cloud server via an Internet;
the terminal devices are configured to obtain first voice signals and transmit the first voice signals to the host device;
the clients are configured to obtain second voice signals and transmit the second voice signals to the cloud server;
the cloud server is configured to receive the second voice signals and forward the second voice signals to the host device; and
the host device is configured to receive the first voice signals and the second voice signals, perform mixing processing on the first voice signals and the second voice signals to generate a mixed signal corresponding to one of the terminal devices and transmit the mixed signal to the terminal device, and to generate a mixed signal corresponding to one of the clients and forward the mixed signal to the client through the cloud server.

According to a second aspect of the embodiments of the present disclosure, there is provided a host device, wherein the host device and a plurality of terminal devices are in a same wireless access network, the host device and a plurality of clients respectively establish connection channels with a cloud server via an Internet;
the host device is configured to receive first voice signals transmitted by the terminal devices and second voice signals transmitted by the clients forwarded by the cloud server, perform mixing processing on the first voice signals and the second voice signals to respectively generate a mixed signal corresponding to one of the terminal devices and transmit the mixed signal to the terminal device, and to generate a mixed signal corresponding to one of the clients and forward the mixed signal to the client through the cloud server.

According to a third aspect of the embodiments of the present disclosure, there is provided a call system, including a host device, a plurality of terminal devices, a cloud server and a plurality of clients, wherein the host device and the terminal devices are in a same wireless access network, the host device and the clients respectively establish connection channels with the cloud server via an Internet;
the terminal devices are configured to obtain first voice signals and transmit the first voice signals to the host device;
the clients are configured to obtain second voice signals and transmit the second voice signals to the cloud server;
the cloud server is configured to receive the second voice signals and forward the second voice signals to the host device; and
the host device is configured to receive the first voice signals and the second voice signals, perform mixing processing on the first voice signals and the second voice signals to generate a mixed signal corresponding to one of the terminal devices and transmit the mixed signal to the terminal device, and to generate a mixed signal corresponding to one of the clients and forward the mixed signal to the client through the cloud server.

According to a third aspect of the embodiments of the present disclosure, there is provided a computer program product, wherein the computer program product is integrated on a first mobile terminal, the first mobile terminal, a plurality of second mobile terminals and a host device respectively establish connection channels with a cloud server via an Internet, and the host device and a plurality of terminal devices are in a same wireless access network;
when the computer program product is executed by the first mobile terminal, the following steps are implemented:
obtaining a second voice signal acquired by the first mobile terminal and transmitting the second voice signal to the cloud server to enable the cloud server to forward the second voice signal acquired by the first mobile terminal to the host device; and
receiving a mixed signal transmitted by the host device, wherein the mixed signal is generated by the host device after perform mixing processing on first voice signals transmitted by the terminal devices and second voice signals acquired by the second mobile terminals.

According to a fourth aspect of the embodiments of the present disclosure, there is provided a mobile terminal, wherein the mobile terminal, a plurality of other mobile terminals except the mobile terminal and a host device respectively establish connection channels with a cloud server via an Internet, the host device and a plurality of terminal devices are in a same wireless access network, the mobile terminal includes a processor, a memory and a computer program stored in the memory for the processor to execute, and when the processor executes the computer program, the following steps are implemented:
obtaining a second voice signal acquired by the mobile terminal and transmitting the second voice signal to the cloud server to enable the cloud server to forward the second voice signal acquired by the mobile terminal to the host device; and
receiving a mixed signal transmitted by the host device, wherein the mixed signal is generated by the host device after perform mixing processing on first voice signals transmitted by the terminal devices and second voice signals acquired by the other mobile terminals.

According to a fifth aspect of the embodiments of the present disclosure, there is provided a computer-readable storage medium, wherein a computer program is stored on the storage medium, and when the computer program is executed, the following steps are implemented:
obtaining a second voice signal acquired by a mobile terminal and transmitting the second voice signal to a cloud server to enable the cloud server to forward the second voice signal acquired by the mobile terminal to a host device; and
receiving a mixed signal transmitted by the host device, wherein the mixed signal is generated by the host device after perform mixing processing on first voice signals transmitted by a plurality of terminal devices and second voice signals acquired by other mobile terminals except for the mobile terminal.

According to a sixth aspect of the embodiments of the present disclosure, there is provided a computer program product, wherein the computer program product is integrated on a cloud server, the cloud server respectively establishes connection channels with a host device and a plurality of clients via an Internet, and the host device and a plurality of terminal devices are in a same wireless access network;
when the computer program product is executed by the cloud server, the following steps are implemented:
receiving second voice signals transmitted by the clients;
forwarding the second voice signals to the host device to enable the host device to perform mixing processing on first voice signals and the second voice signals transmitted by the terminal devices to generate a mixed signal corresponding to one of the clients; and
receiving the mixed signal corresponding to one of the clients and forwarding the mixed signal to the client.

According to a seventh aspect of the embodiments of the present disclosure, there is provided a cloud server, wherein the cloud server respectively establishes connection channels with a host device and a plurality of clients via an Internet, the host device and a plurality of terminal devices are in a same wireless access network, a computer program is stored on the cloud server, and when the computer program is executed, the following steps are implemented:
receiving second voice signals transmitted by the clients;
forwarding the second voice signals to the host device to enable the host device to perform mixing processing on first voice signals transmitted by the terminal devices and the second voice signals to generate a mixed signal corresponding to one of the clients; and
receiving the mixed signal corresponding to one of the clients and forwarding the mixed signal to the client.

According to an eighth aspect of the embodiments of the present disclosure, there is provided a computer-readable storage medium, wherein a computer program is stored on the storage medium, and when the computer program is executed, the following steps are implemented:
receiving second voice signals transmitted by a plurality of clients;
forwarding the second voice signals to a host device to enable the host device to perform mixing processing on first voice signals transmitted by a plurality of terminal devices and the second voice signals to generate a mixed signal corresponding to one of the clients; and
receiving the mixed signal corresponding to one of the clients and forwarding the mixed signal to the client.

According to the embodiments of the present disclosure, considering that although the current wireless intercom system has advantages of flexible deployment and high call quality, it can only communicate in a small range, and thus the coverage is limited and the number of accessed terminal devices connected is also limited. Although the communication quality of a network call based on voice over Internet is relatively poor, it covers a wide range and can be deployed in a wide area. Therefore, a call system can be built by combining the advantages of the wireless intercom system and the network call. The call system includes a host device, a cloud server and a plurality of clients, wherein the host device and a plurality of terminal devices are in a same wireless access network, and the cloud server communicates with the host device and the clients via an Internet; the host device is configured to receive first voice signals transmitted by the terminal devices and second voice signals transmitted by the clients forwarded by the cloud server, perform mixing processing on the first voice signals and the second voice signals to respectively generate a mixed signal corresponding to one of the terminal devices and transmit the mixed signal corresponding to the terminal device to the terminal device, and to generate a mixed signal corresponding to one of the clients and forward the mixed signal corresponding to the client to the client through the cloud server. The call system has high-quality call performance, flexible deployment and large-scale coverage capability, and thus users who are not within the coverage of the wireless intercom system can be connected to the wireless intercom system to make calls.

It should be understood that the above general descriptions and subsequent detailed descriptions are merely illustrative and explanatory, and shall not constitute limitation to the present disclosure.

### BRIEF DESCRIPTION OF THE DRAWINGS

The accompanying drawings, which are incorporated in and constitute a part of this specification, illustrate examples consistent with the present disclosure and, together with the description, serve to explain the principles of the disclosure.
FIG. 1(a) is a schematic structural diagram of a wireless intercom system according to an embodiment of the present disclosure.
FIG. 1(b) is a schematic structural diagram of a wireless intercom system according to an embodiment of the present disclosure.
FIG. 2 to FIG. 6 are schematic structural diagrams of a call system according to an embodiment of the present disclosure.
FIG. 7 is a schematic diagram of an internal structure of a host device according to an embodiment of the present disclosure.

### DETAILED DESCRIPTION OF THE EMBODIMENTS

Exemplary embodiments will be described in detail here, examples of which are illustrated in the accompanying drawings. When the following description refers to the drawings, unless otherwise indicated, the same numerals in different drawings indicate the same or similar elements. The implementations set forth in the following description of exemplary embodiments do not represent all implementations consistent with the embodiments of the present disclosure. Instead, they are merely examples of apparatuses and methods consistent with aspects related to the embodiments of the present disclosure as recited in the appended claims.

Terms used in the embodiments of the present disclosure are only adopted for the purpose of describing specific embodiments and not intended to limit the embodiments of the present disclosure. The singular forms "a", "one" and "the" used in the present disclosure and the appended claims are also intended to include plural forms, unless the context clearly indicates other meanings. It should also be understood that the term "and/or" as used in the present disclosure refers to and includes any and all possible combinations of one or more of the associated listed items.

It should be understood that, although terms first, second, third and the like may be adopted to describe various information in the embodiments of the present disclosure, the information should not be limited to these terms. These terms are only configured to distinguish the same type of information. For example, first information may also be referred to as second information, and similarly, the second information may also be referred to as the first information without departing from the scope of the embodiments of the present disclosure. For example, terms "if" and "in case of" used herein may be explained as "while" or "when" or "responsive to determining", which depends on the context.

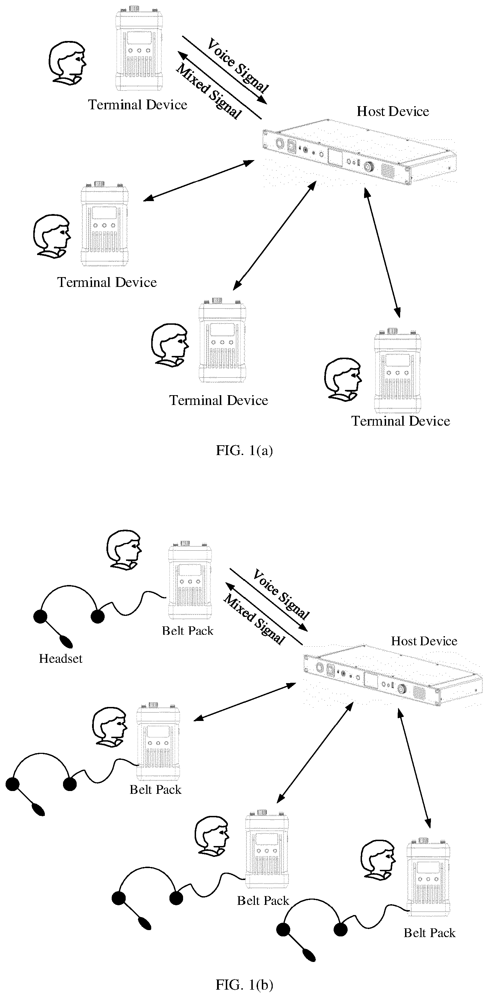

In scenarios such as film shooting and large-scale activities, it is usually necessary to use a wireless intercom system to realize communication between staffs at an activity site, so as to complete the organization and scheduling of work. As shown in FIG. 1(a), FIG. 1(a) is a schematic diagram of a wireless intercom system. The wireless intercom system includes a host device and a plurality of terminal devices wirelessly connected to the host device. In some scenarios, the terminal devices can be integrated devices integrating voice signal acquisition functions, voice signal playback functions and wireless transceiver functions, for example, the integrated devices can be handheld walkie-talkies. In some scenarios, the terminal devices can also be devices with only wireless transceiver functions. The terminal devices can be connected to voice acquisition devices and voice playback devices, and can be configured to receive voice signals acquired by the voice acquisition devices, and then forward the voice signals to a host device; and can also be configured to receive a mixed signal transmitted by the host device, and play the mixed signal to one or more users through the voice playback devices. For example, as shown in FIG. 1 (b), the terminal devices can be belt packs, and the belt packs can be connected to a headset.

The host device can be configured to realize mixing functions, that is, after receiving the voice signals transmitted by the terminal devices, for each of the terminal devices, mixing processing is performed on the voice signals transmitted by other terminal devices except for the terminal device, and then a mixed voice signal is forwarded to the terminal device. In addition, the host device can also be configured with functions such as sound effect enhancement, network expansion, analog two-wire and four-wire voice access, digital voice expansion, call grouping and providing human-computer interaction interface based on actual needs. Of course, in practical applications, the host device can be an integrated device, or can also be a device obtained by connecting and combining two or more devices in a certain way.

Since the host device and the terminal devices are usually connected wirelessly, and the wireless intercom system can only be applied in a small range because of a limited wireless communication distance, it is impossible to allow users outside the wireless communication coverage to access the wireless intercom system and communicate with the terminal devices in the wireless intercom system. For example, at an activity site, in addition to communication between staffs at the activity site, it may be necessary to access other staffs that are far away from the activity site to work together. Alternatively, one or more staffs at the activity site need to leave the activity site temporarily because of temporary business, but the organization and scheduling of the activity may still need their participation, and thus the current wireless intercom system cannot meet the needs of the above scenarios.

In addition, the current wireless intercom system needs to support a full duplex real-time call, and thus it is necessary to allocate separate wireless communication channels for voice signals between terminal devices and separate wireless communication channels for uplink and downlink voice signals of each of the terminal device to realize a full duplex call between the terminal devices and ensure stable and reliable call performance. However, commonly available wireless channel resources are limited, which leads to the limitation of the number of terminal devices in the wireless intercom system, and thus it is not suitable for scenarios with a large number of call users.

Based on the above, the embodiments of the present disclosure provide a call system. Considering that although the current wireless intercom system has advantages of flexible deployment and high call quality, it can only communicate in a small range, and thus the coverage is limited and the number of accessed terminal devices connected is also limited. Although the communication quality of a network call based on voice over Internet is relatively poor, it covers a wide range and can be deployed in a wide area. Therefore, a call system having high-quality call performance, flexible deployment and large-scale coverage capability can be built by combining the advantages of the wireless intercom system and the network call. Based on the call system, users who are not within the coverage of the wireless intercom system can be connected to the wireless intercom system to make calls. Moreover, due to the wide coverage of the Internet, the users can access the call system anytime and anywhere, which is very flexible and convenient.

At the same time, since the network call based on voice over Internet may not need to use wireless channel resources used by the wireless intercom system, the number of call users in the wireless intercom system will not be limited due to the limited wireless channel resources, that is, the wireless intercom system can accommodate more users.

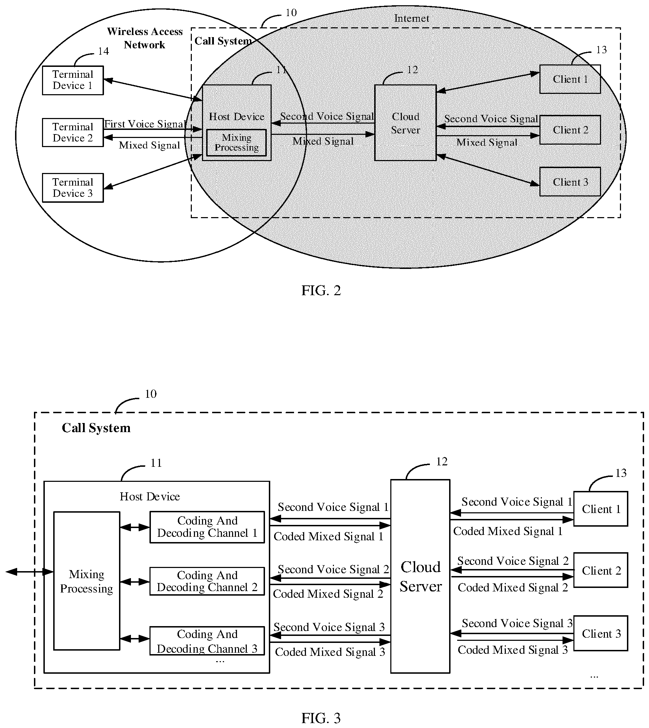

As shown in FIG. 2, FIG. 2 is a call system 10 according to an embodiment of the present disclosure. The call system 10 includes a host device 11, a cloud server 12 and a plurality of clients 13. The host device 11 is wirelessly connected to a plurality of terminal devices 14. The host device 11 and the terminal devices 14 are in a same wireless access network, and connections among the host device 11, the clients 13 and the cloud server 12 are established via an Internet.

For example, the host device 11 and the terminal devices 14 can communicate with each other in short-distance communication modes such as WiFi, Bluetooth, ZigBee and digital enhanced cordless telecommunications (DECT). Alternatively, in order to ensure the call quality between the host device 11 with the terminal devices 14, wireless communication can also be realized between the host device 11 with the terminal devices 14 through some self-defined private protocols, for example, the host device 11 and the terminal devices 14 can operate in independently allocated frequency bands such as ultra high frequency (UHF) frequency bands, 1.9GHz DECT band and 2.4G/5GHz industrial scientific medical (ISM) band. At the same time, digital wireless modulation modes such as frequency-shift keying (FSK), binary phase shift keying (BPSK) and quadrature phase shift keying (QPSK) can be used to support anti-interference measures such as auto channel selection (ACS) and auto detection frequency hopping (ADHS) automatic frequency hopping, so as to ensure relatively high call quality between the host device 11 with the terminal devices 14. Separate wireless communication channels can be allocated for voice signals between the terminal devices, and separate wireless communication channels can be allocated for uplink and downlink voice signals of each of the terminal device, so as to realize the full duplex call between the terminal devices.

The cloud server 12 establishes communication connections with the host device 11 and the plurality of clients 13 respectively based on Internet protocol. In order to allow other users who are relatively far away from the host device 11 (for example, other users who are unable to make wired connection with the host device 11, or who are not in the wireless network coverage area where the wireless intercom system formed by the terminal devices 14 and the host device 11 is located) to also join to a call group formed by the terminal devices for voice calls, the host device 11 can communicate with the cloud server 12 via the Internet, and the cloud server 12 can also communicate with the clients 13 via the Internet. Due to the relatively wide coverage of the Internet, the clients 13 can access to the call group formed by the terminal devices 14 at anytime and anywhere, and realize a group call with the terminal devices 14, which is very convenient and flexible.

For example, the plurality of terminal devices 14 can acquire first voice signals of users at an activity site and transmit the first voice signals to the host device 11. The clients 13 can acquire second voice signals of users who are relatively far away from the activity site (of course, they can be the users at the activity site) and transmit the second voice signals to the cloud server 12, and then the cloud server 12 can forward the second voice signals to the host device 11. The host device 11 can receive the first voice signals and the second voice signals, and perform mixing processing on the received first voice signals and the second voice signals to generate a mixed signal corresponding to one of the terminal devices 14 (of course, it can also be each of the terminal devices of the call system) and a mixed signal corresponding to one of the client devices 13, respectively, of course, it can also be each of the terminal devices and the clients of the call system, which can be provided based on the actual situation. After completing the mixing processing, the host device 11 can transmit the mixed signal corresponding to one of the terminal devices 14 to each terminal device 14, and forward the mixed signal corresponding to one of the client devices 13 to each client 13 through the cloud server 12.

For any terminal device 14, the voice signal transmitted by the terminal device 14 can be removed from the received voice signals, and then the mixing processing can be performed on the voice signals transmitted by other terminal devices 14 and the clients 13 in the same group with the terminal device 14 and the mixed voice signal can be transmitted to the terminal device 14. Similarly, for any client 13, the mixing processing can be performed on the voice signals the voice signals transmitted by the terminal devices 14 and other clients 13 in the same group with the client 13 and the mixed voice signal can be transmitted to the client 13. Therefore, it can be realized that each member in the group can hear speeches of other members, and the transmission efficiency can be improved and the delay can be reduced by mixing the voices of multiple members into one voice and then transmitting the one voice.

The terminal devices 14 can be integrated devices integrating voice signal acquisition functions, voice signal playback functions and wireless transceiver functions, for example, the integrated devices can be handheld walkie-talkies. Of course, the terminal devices 14 can also be devices with only wireless transceiver functions, for example, belt packs. The terminal devices 14 can be connected to devices (for example, headsets) 15 with voice signal acquisition and playback functions, as shown in FIG. 1 (b). The headsets 15 can be used to acquire first voice signals of users and transmit the first voice signals to the terminal devices 14. The terminal devices 14 transmit the first voice signals to the host device 11 for performing the mixing processing, and then receive a mixed signal transmitted by the host device 11 and forward the mixed signal to the headsets 15 for playback to the users.

In some scenarios, the host device 11 can be an integrated device that not only has mixing processing functions, but also can integrate functions required by various call systems, for example, sound effect enhancement, network expansion, analog two-wire and four-wire voice access, digital voice expansion, group management, providing human-computer interaction interface, connecting Tally devices according to actual needs. Of course, in some scenarios, the host device 11 can also be a device obtained by combining two or more devices. For example, the host device 11 can be composed of two devices in communication connection, and each of the two devices can realize a part of the above functions.

The cloud server 12 can be a call service provided on a cloud server or a cloud server cluster. The call service can realize group call between the clients 13 and the terminal devices 14. For example, the call service can be deployed on platform as a service (PaSS) or software as a service (SaSS) platforms of current mainstream cloud service providers, for example, Amazon cloud, Microsoft cloud, Alibaba cloud, Tencent Cloud, or the like, and the embodiments of the present disclosure are not limited.

The clients 13 can be applications (APPs) installed on mobile terminals or web clients, for example, APPs installed on mobile terminals such as smartphones, smart wearables, tablets, and the like. The clients 13 can transmit second voice signals acquired by the mobile terminals to the cloud server 12, and forward the second voice signals to the host device 11 through the cloud server 12. At the same time, the clients 13 can receive the mixed signals and play the mixed signals to the users. Of course, in some embodiments, if the terminal devices 14 or the host device 11 has functions of installing the APPs, the clients can also be installed on the terminal devices 14 or the host device 11.

The call system provided by the embodiments of the present disclosure can not only ensure the reliable call quality and flexible deployment of the original wireless intercom system, but also make use of the characteristics and flexibility of large-scale coverage of Internet calls, so that users who are relatively far away from the wireless intercom system can also access the wireless intercom system to realize group calls, and can reduce the problem that the number of users in the wireless intercom system is limited due to the limited wireless channel resources of the wireless intercom system.

For example, in some application scenarios, if the number of users who need to access the call system is relatively large, the number of accessed terminal devices 14 is also limited due to the limited wireless channel resources. In order to access more users, some users can select to access the call system through the clients 13, and thus the number of users connected to the call system can be greatly increased. In addition, since the terminal devices 14 and the host device 11 can communicate through some independent frequency bands, the call quality is relatively high; while the clients 13 and the host device 11 can communicate through the Internet, the call quality will be slightly poor. Therefore, when using the above call system to realize the cooperative work of staffs at an activity site, for roles that are more important among the staffs and within the coverage of the wireless communication, the above terminal devices 14 can be selected for access; and for roles that are less important among the staffs or roles that are not within the coverage of the wireless communication, the above clients 13 can be selected for access, and thus it can be realized that the call system can accommodate a relatively large number of users, and the impact on the call quality can be reduced as much as possible to ensure the smooth progress of the activity.

In some embodiments, the host device 11 can be connected to the cloud server 12 via the Internet, and the cloud server 12 can also be connected to the clients 13 via the Internet. Considering that there is a certain delay in transmitting voice signals via the Internet, in order to minimize the delay and ensure the call quality of the clients 13, after acquiring the second voice signals of the users, the clients 13 can perform compression and coding processing on the second voice signals, and then transmit the compressed coded second voice signals to the cloud server 12. Correspondingly, after receiving the second voice signals forwarded by the cloud server 12, the host device 11 can decode the received second voice signals, and then perform mixing processing on the decoded second voice signals and the first voice signals. Similarly, after completing the mixing processing, the host device 11 can perform coding processing on the mixed signal corresponding to each client 13, and then forward the mixed signal to each client 13 through the cloud server 12. For the second voice signals transmitted via the Internet, the second voice signals can be coded and then transmitted, thereby reducing the amount of data, improving the transmission efficiency and ensuring the call quality of the whole call system.

In some embodiments, when performing coding processing on the mixed signals corresponding to respective clients, the host device 11 can use a low-loss and low-delay coding technology to perform compression and coding processing on the mixed signals. For example, the low-loss and low-delay coding technology can include one or more of an OPUS coding technology, a Speex coding technology, an internet low bitrate codec (ILBC) coding technology, an internet speech audio codec (ISAC) coding technology and a super-wideband internet low bitrate codec (SILK) coding technology. Therefore, the call delay can be reduced as much as possible, and the call quality will not be greatly affected.

Since the wireless channel resources for wireless communication between the terminal devices 14 with the host device 11 are limited, the number of the terminal devices 14 in the call system is limited. Since the clients 13 and the host device 11 are connected via the Internet, the number of the clients 13 will not be limited too much. Therefore, a plurality of clients 13 can be connected to the call system, thereby increasing the number of users in the call system. Similarly, in order to ensure that the plurality of clients 13 can still work normally when connected to the call system, the host device 11 can include a plurality of coding and decoding channels, each of the coding and decoding channels corresponds to a client 13, and is used to perform decoding and mixing processing on the second voice signal transmitted by the client 13, and perform coding processing the mixed signal transmitted to the client 13 before transmitting the mixed signal to the cloud server 12.

For example, as shown in FIG. 3, the clients 13 can include a client 1, a client 2, a client 3, and the like, and correspondingly, the host device 11 can include a coding and decoding channel 1, a coding and decoding channel 2, a coding and decoding channel 3, and the like corresponding to the above clients 13. The coding and decoding channel 1 is used to decode a second voice signal 1 acquired by a mobile terminal where the client 1 is located, so as to mix the decoded second voice signal with the first voice signal to obtain a mixed signal 1 corresponding to the client 1. Then, the mixed signal 1 is coded by using the coding and decoding channel 1 to obtain a coded mixed signal 1, and the coded mixed signal 1 is forwarded to the client 1 through the cloud server. The voice signals of the client 2 and the client 3 can be coded and decoded by using the coding and decoding channel 2 and the coding and decoding channel 3, respectively.

In some embodiments, since the host device 11 is connected to the cloud server 12 via the Internet, and the cloud server 12 is also connected to the clients 13 via the Internet, before forwarding the mixed signal corresponding to each client 13 to the client 13 through the cloud server 12, the host device 11 can encapsulate the mixed signal based on a voice over IP (VOIP), and then transmit the encapsulated mixed signal to the cloud server 12, so that the cloud server 12 can forward the encapsulated mixed signal to the client 13, and the encapsulated mixed signal can be played to the user through the client 13.

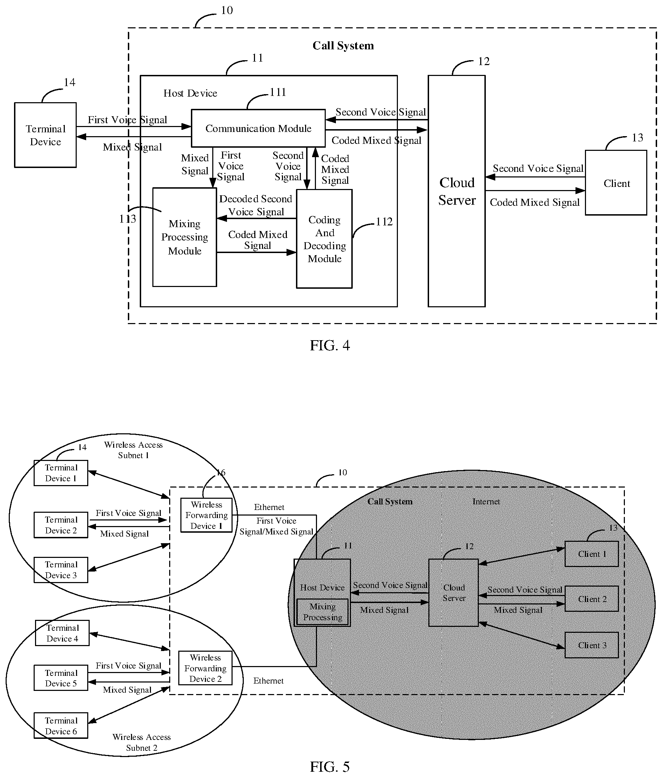

In some embodiments, as shown in FIG. 4, the host device 11 can include a communication module 111, a coding and decoding module 112 and a mixing processing module 113. The communication module 111 is configured to receive the first voice signals and the second voice signals, transmit the first voice signals and the second voice signals to the mixing processing module 113, receive the mixed signal corresponding to one of the terminal devices transmitted by the mixing processing module 113 and transmit the mixed signal to the terminal device 14, and receive the mixed signal corresponding to one of the clients 13 transmitted by the mixing processing module 113 and transmit the mixed signal to the client 13.

For example, since the host device 11 is wirelessly connected to the terminal device 14, the communication module 111 at least includes a wireless communication submodule for transmitting voice signals to the terminal device 14. Meanwhile, a communication connection between the host device 11 and the cloud server 12 can be realized through WiFi, mobile communication networks (for example, 4G or 5G), telecommunication networks, and the like. Therefore, the communication module 111 can also include one or more submodules for realizing the above communication connection.

The coding and decoding module 112 is configured to decode the second voice signals and transmit the decoded second voice signals to the mixing processing module 113; and receive the mixed signal corresponding to one of the clients 13 transmitted by the mixing processing module 113 and perform coding processing on the mixed signal to transmit the coded mixed signal to the cloud server 12, so that the coded mixed signal can be forwarded to the client 13 through the cloud server 12. Since there is a delay in the transmission of voice signals via the Internet, in order to reduce the delay, improve the stability of voice signals transmitted via the Internet and ensure the voice quality, the host device 11 can also be provided with a coding and decoding module 112, and the coding and decoding module 112 is configured to perform compression and coding processing on the mixed signal transmitted to the client 13 before transmitting the mixed signal. Similarly, the client 13 will perform compression and coding processing on the acquired second voice signal before transmitting the acquired second voice signal to host device 11, and thus the host device 11 can decode the second voice signal and then perform mixing processing.

The mixing processing module 113 is configured to perform mixing processing on the first voice signals and the second voice signals to generate the mixed signal corresponding to one of the terminal devices 14 and the mixed signal corresponding to one of the clients 13.

In generally, the host device 11 includes a central processing unit (CPU) configured to realize functions of the host device 11, for example, various interface managements, interface managements and network expansion. In some embodiments, the coding and decoding module 112 of the host device 11 can be directly integrated on the CPU of the host device 11, that is, the CPU is not only used to realize the above functions, but also takes into account coding and decoding functions.

Of course, if the CPU of the host device 11 is directly used for coding and decoding, since the computing power of the CPU is limited, data in the coding and decoding channels on the CPU is also limited. If the number of accessed clients 13 increases, more coding and decoding channels are needed, and there is a problem that more clients 13 cannot be added due to the limited computing power of the CPU. In order to solve the above problem, the coding and decoding module 112 can be integrated on one or more special daughter cards connected to the CPU of the host device 11 through a hardware interface. The daughter cards can be a processor or a dedicated chip with codec capability, and multiple hardware interfaces (for example, a peripheral component interconnect express (PCIE) interface) can be reserved on the CPU for accessing the daughter cards.

In some embodiments, the number of daughter cards can be determined based on the number of clients 13 that want to access. For example, the number of coding and decoding channels in each of the daughter cards can be one or more, each client 13 needs one coding and decoding channel, and thus the more the clients 13 access, the more the daughter cards there are.

By performing coding and decoding using the daughter cards connected to the CPU, the number of coding and decoding channels can be adjusted by adjusting the number of daughter cards connected to the CPU, thereby meeting the requirements of different numbers of clients and being more convenient and flexible.

In some embodiments, the mixing processing module 113 can be integrated on a digital signal processor (DSP) chip or a field programmable gate array (FPGA) chip. For example, one or more mixing processing modules can be provided on the DSP chip or the FPGA chip, and each of the mixing processing modules can be configured to perform mixing processing on voice signals of members in a group. In addition, since the clients 13 are also connected to the call system, that is, the mixing processing module 113 needs to perform mixing processing on voices of more users, in order to meet the requirement that the call system can accommodate more users, a DSP chip or an FPGA chip with high computing power can be appropriately selected.

In some embodiments, voice signals transmitted between the mixing processing module 113 and the coding and decoding module 112 can be pulse code modulation (PCM) voice signals. For example, a plurality of PCM channels can be included between the mixing processing module 113 and the coding and decoding module 112 for transmitting lossless second voice signals and mixed signals.

In some embodiments, the plurality of terminal devices 14 and the plurality of clients 13 can be divided into a plurality of groups, and full duplex calls can be conducted between the clients 13 and the terminal devices 14 in the same group, while calls can be isolated between different groups. In order to support a plurality of call groups, the mixing processing module 113 can also include a plurality of mixing processing modules 113, and each of the mixing processing modules 113 corresponds to a group, and is configured to perform mixing processing on the first voice signals transmitted by the terminal devices 14 and the second voice signals transmitted by the clients 13 in the group.

For example, during an activity, staffs are usually divided into a plurality of groups according to their responsibilities, and staffs in each of the groups can realize voice calls. Taking a movie recording activity as an example, during the activity, staffs can be divided into photography group, lighting group, clothing group, and the like, and thus the terminal devices 14 or the clients 13 used by these staffs can be divided into the above three groups. Correspondingly, the host device 11 also needs to be provided with a mixing processing module 113 corresponding to each of the above groups, and the mixing processing module 113 is configured to perform mixing processing on voice signals of members of the group and transmit the voice signals to the members in the group. For example, before conducting a group call, a user can manage and configure the terminal devices 14 and the clients 13 in the group (for example, through an interactive interface on the host device 11), that is, the user can divide the terminal devices 14 and the clients 13 into a plurality of groups. The terminal devices 14 and the clients 13 have identification information uniquely identifying themselves, so that the user can group them based on the identification information.

In some embodiments, the plurality of terminal devices 14 and the plurality of clients 13 are divided into a plurality of groups, and members in each of the plurality of groups can realize full duplex calls. Each of the clients 13 needs to join a call group composed of terminal devices before being able to communicate with other members in the group, and thus before transmitting the second voice signals to the host device 11 through the cloud server 12, each client 13 can also send a request to join a target group to the cloud server 12. The request carries a group identifier of the target group, and the group identifier is used to uniquely identify the target group.

In some embodiments, the cloud server 12 may have a function of group management, and thus the cloud server 12 can directly add each client 13 to the target group based on the group identifier of the target group. In some embodiments, the cloud server 12 may not have the function of group management, and thus the cloud server 12 can forward the request to the host device 11, so that the host device 11 can add each client 13 to the target group based on the group identifier of the target group.

For example, when a group is managed and distributed by a user, every time a group is created, the group has a group identifier that uniquely identifies the group. For example, the group identifier can be a string of numbers or letters, or a combination of numbers and letters. When a user wants to access a certain group of a call system through a mobile terminal with the client 13 installed, the user can determine a group identifier of the group, and then initiate a request carrying the group identifier through the client 13. After receiving the request, the cloud server 12 can add the client 13 to a corresponding group based on the group identifier; or the cloud server 12 can forward the request to the host device 11, and the host device 11 can add the client 13 to the corresponding group, so that the user can make calls with the terminal devices 14 or the clients 13 in the group based on the client 13.

In some embodiments, the call system further includes a plurality of terminal devices 14. The plurality of terminal devices 14 can be connected to devices with voice acquisition and playback functions (for example, headsets), and can be configured to transmit first voice signals acquired by the devices with voice acquisition and playback functions to the host device 11, and receive mixed signals transmitted by the host device 11 and play the mixed signals through the devices with voice acquisition and playback functions.

In some embodiments, in order to increase a coverage area and a call distance of the terminal devices 14, and increase the number of terminal devices 14, as shown in FIG. 5, the call system 10 further includes a plurality of wireless forwarding devices 16. Each of the plurality of wireless forwarding devices 16 and a plurality of terminal devices 14 are located in a same wireless access subnet, and the wireless forwarding device 16 is connected to the host device 11 via an Ethernet to form a wireless access network with a larger coverage area. The wireless forwarding device 16 is configured to receive first voice signals transmitted by a plurality of terminal devices 14 and forward the first voice signals to the host device 11, and receive a mixed signal corresponding to each of the terminal devices 14 transmitted by the host device 11 and forward the mixed signal to the terminal device 14. Respective wireless forwarding devices 16 in the wireless access subnet in different frequency bands are connected through the host device 11, so that the voice signals received by the wireless forwarding device 16 from the terminal device 14 can be forwarded to another wireless forwarding device 16 through the host device 11, and the terminal device 14 connected to any wireless forwarding device 16 can talk with the terminal devices 14 connected to other wireless forwarding devices 16, thereby increasing the number of terminal devices 14 that can talk at the same time, not only realizing the expansion of the terminal devices 14, but also expanding the call distance.

In some embodiments, each of the plurality of clients 13 is an application (APP) installed on a mobile terminal. For example, the client 13 can be voice calling software installed on a mobile phone. Users can download an installation program of the calling software from the cloud server 12, install the calling software, and then use the calling software to join a call group formed by the terminal devices 14. The APP supports access to the call system to realize communication with the terminal devices 14. At the same time, the APP can also have functions of coding and decoding, echo cancellation, receiving and transmitting of VOIP signals, and the like.

In the related art, when managing the call system, the call system is usually managed through an interactive interface or buttons on the host device 11, a management mode is relatively simple and requires the user to walk to a location of the host device 11 for operation, which is cumbersome and inflexible. In some embodiments, in order to manage the call system more conveniently and flexibly, the management mode of the call system can be expanded, that is, the cloud server 12 can provide management functions such as network configuration, user management, group setting and voice parameter adjustment for the call system, and the entire call system can be managed remotely at any time through a dedicated client 13 with management authority, so as to make the management mode more flexible. Therefore, in some embodiments, a designated client 131 among the plurality of clients 13 is further used to send a management request to the cloud server 12. The cloud server 12 is also used to perform corresponding management operations on the call system based on the management request, or the cloud server 12 can send the management request to the host device 11 to enable the host device 11 to perform corresponding management operations on the call system.

In some embodiments, the management operations include one or more of the following: an operation of group management for the plurality of clients 13 or the plurality of terminal devices 14, an operation of configuring voice parameters of the call system and an operation of adding registered users. That is, the user can manage group members by operating on the interface of the designated client 131 with management authority, for example, dividing the clients 13 or the terminal devices 14 in the call system into different groups, or adding new members to the existing groups, or deleting the original members in the group. Alternatively, the voice parameters of the call system can be configured through the designated client 131, or new registered users can be added to the call system, or the like. By adding a cloud server to manage the call system, the management of the call system can be more flexible.

In some embodiments, the cloud server 12 is further configured to mix the second voice signals received from the plurality of clients 13 into one voice signal, and then transmit the one voice signal to the host device 11. By combining the multiple channels of second voice signals acquired by the clients 13 into one voice signal in the cloud server 12 and then transmitting the one voice signal, the transmission efficiency of the second voice signals can be improved. Of course, the step of adding mixing to the cloud server 12 will also bring a certain delay, therefore, it can be determined whether to deploy mixing on the cloud server based on the improvement of transmission efficiency and the delay caused by mixing.

In order to further explain the call system provided by the embodiments of the present disclosure, the following will be explained in conjunction with a specific embodiment.

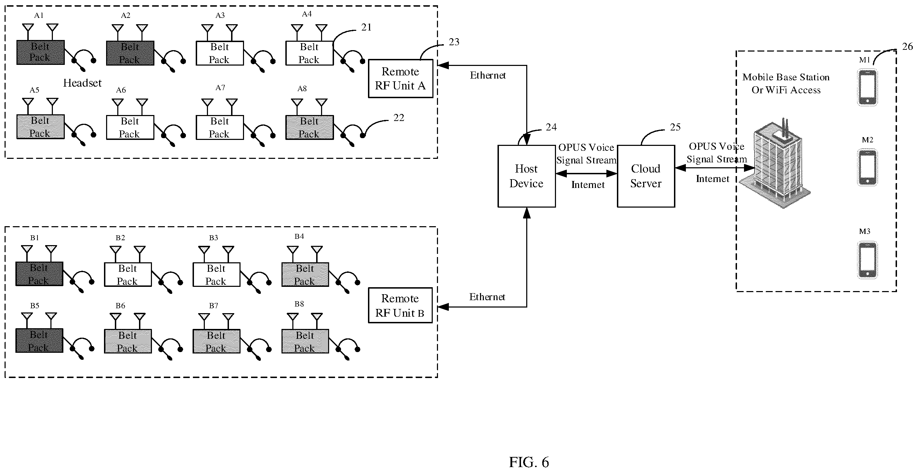

As shown in FIG. 6, FIG. 6 is a schematic diagram of a call system according to an embodiment of the present disclosure. The call system includes a plurality of belt packs 21. Each of the belt packs 21 is connected to a headset 22 and one or more remote RF units 23 (such as a remote RF unit A and a remote RF unit B in the FIG. 6), and each of the remote RF units 23 is located in a local area network and wirelessly connected to one or more belt packs 21. The remote RF units 23 are connected to a host device 24 via an Ethernet. The host device 24 is connected to a cloud server 25 provided with call services based on Internet protocol, and the cloud server 25 is connected to on or more mobile terminals 26 with call APPs based on the Internet protocol.

Users can divide the belt packs 21 and the mobile terminals 26 into a plurality of groups, and members of each of the plurality of groups can make group calls. For example, the belt packs 21 and the mobile terminals 26 in the FIG. 6 can be divided into three different groups, a group 1, a group 2 and a group 3, where:
the group 1: A1, A2, B1, B5, M1;
the group 2: A3, A4, A6, A7, B2, B3, M2; and
the group 3: A5, A8, B4, B6, B7, B8, M3.

After acquiring voice signals of the users, the headsets 22 can output the voice signals to the belt packs 21. The belt packs are battery-powered wireless terminal devices, which can wirelessly receive and transmit voice during a call process. The belt packs 21 can transmit the voice signals acquired by the headsets 22 to the remote RF units 23. The remote RF units 23 has wireless transceiver functions and Ethernet expansion functions, and can convert the voice signals transmitted by the accessed belt packs 21 into digital IP signals, and then transmit the voice signals to the host device 24 based on a voice over internet protocol. The voice signals transmitted between the headsets 22 with the host device 24 can be pulse code modulation (PCM) signals.

The mobile terminals 26 can acquire the voice signals of the users, then perform OPUS coding on the voice signals through the call APPs installed on the mobile terminals 26, and transmit the OPUS coded voice signals to the cloud server 25 via the Internet, so that the call services provided on the cloud server 25 can transmit the OPUS coded voice signals to the host device 24.

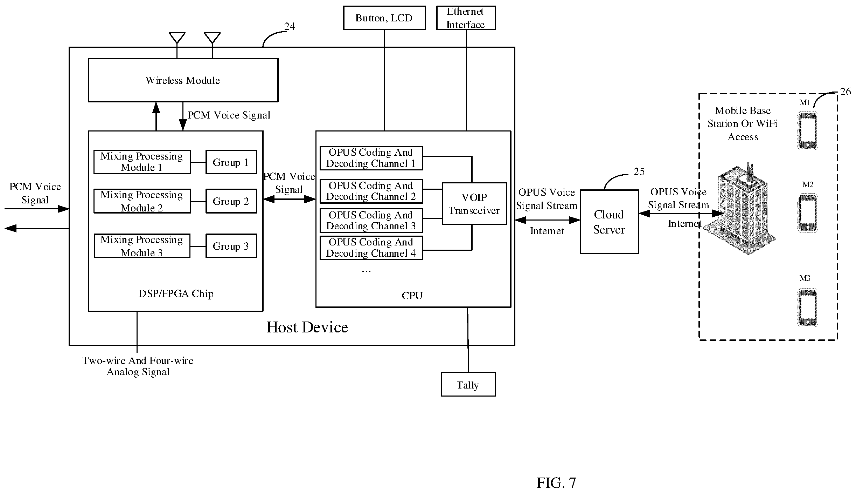

The internal structure of the host device 24 is shown in FIG. 7. The internal structure of the host device 24 includes at least a CPU and a DSP/FPGA chip. The CPU can run in a Linux OS system. In some scenarios, the CPU can be integrated with OPUS coding and decoding functions, which are used to perform decoding processing on the voice signals acquired by the mobile terminals 26 forwarded by the cloud server 25, and then transmit the voice signals to the DSP/FPGA chip for mixing processing; and are used to perform OPUS coding on the mixed signal after mixing processing and transmit the coded mixed signal to the cloud server 25. Since the mobile terminals 26 include a plurality of mobile terminals 26, the CPU can include a plurality of OPUS coding and decoding channels, each of the plurality of OPUS coding and decoding channels is used to perform coding and decoding processing on a voice signal of a mobile terminal 26. Of course, since the number of OPUS coding and decoding channels is limited by the computing power of the CPU, when the number of accessed mobile terminals 26 is relatively large, computing resources of a single CPU cannot support the access of the plurality of mobile terminals 26. In some scenarios, the CPU can also include a plurality of hardware interfaces, and the users access daughter cards dedicated for coding and decoding, through which OPUS coding and decoding can be realized. The number of OPUS coding and decoding channels contained in each of the daughter cards is fixed. By inserting multiple daughter cards into the CPU, the coding and decoding functions of the CPU can be expanded, thereby meeting the requirements of different numbers of accessed mobile terminals 26. In addition, CPU Linux OS also supports a transmission control protocol (TCP)/Internet protocol (IP) protocol stack and a voice over internet protocol (VOIP) transmission protocol. The mixed signal can be encapsulated based on the VOIP transmission protocol, then transmit the encapsulated mixed signal to the cloud server 25, and forward to the mobile terminal 26 through the cloud server 25.

One or more mixing processing modules (for example, a mixing processing module 1, a mixing processing module 2, and a mixing processing module 3 in FIG. 7) can be integrated on the DSP/FPGA chip. The mixing processing modules are mainly used to perform mixing processing on the voice signals received by the host device 24, for example, the voice signals transmitted by the belt packs 21, the voice signals acquired by local headsets, two-wire and four-wire analog voice signals, or the voice signals acquired by the mobile terminals 26 forwarded by the cloud server 25, and the like. By performing mixing processing, a mixed signal corresponding to each call user in the group is generated. For example, a mixed signal corresponding to each of the belt packs 21 is generated, and the mixed signal is forwarded to the belt pack 21 through the wireless remote RF unit 23; and a mixed signal corresponding to each of the mobile terminals 26 is generated, then an OPUS coded stream is obtained by performing OPUS coding through an OPUS coding and decoding module integrated on the CPU, and the OPUS coded stream is forwarded to the mobile terminal 26 through the cloud server 25. Each of the mixing processing modules corresponds to a group (for example, a group 1, a group 2 and a group 3 in the FIG. 7), and is used to perform mixing processing on the voice signals of members in the group. The number of groups can be configured according to the processing capacity of the DSP/FPGA chip and on-site application requirements. The voice signal transmitted between the CPU and the DSP/FPGA can be PCM voice signal.

The cloud server 25 can be servers or clusters of mainstream cloud service providers, for example, Amazon Cloud, Microsoft Cloud, Alibaba Cloud or Tencent Cloud, and the like. The main users forward the voice signals transmitted by the mobile terminals 26 to the host device 24, and forward the mixed signal mixed by the host device 24 to mobile terminal 26. At the same time, the cloud server can also deploy service functions such as user registration management, group allocation, voice parameter configuration, wireless intercom system management, and the like. These functions can be flexibly called and controlled through the APPs on the mobile terminals 26 with management authority.

The APPs on the mobile terminals 26 can support functions of voice access and voice processing, for example, adaptive echo cancellation (AEC), noise reduction, and sound quality improvement, OPUS voice coding and decoding, network VOIP stream transmission and reception, and the like. Mobile intelligent terminals with cloud call APPs have conventional functions of wireless belt packs, and the accessible number and access rights are managed by a cloud call service network end.

In addition, the host device 24 can further include an Ethernet interface for connecting to the wireless remote RF units 23 via an Ethernet, or for connecting to other host devices 24 via the Ethernet. The host device 24 can further include a Tally device interface for connecting Tally devices. In addition, the host device 24 can also provide buttons, LCD screens, and the like based on actual needs.

The call system of the embodiments of the present disclosure has the following advantages.
(1) The call system provided by the embodiments of the present disclosure can not only ensure the reliable call quality and flexible deployment of the original wireless intercom system, but also make use of the characteristics and flexibility of large-scale coverage of Internet calls, so that users who are relatively far away from the wireless intercom system can also access the wireless intercom system to realize group calls.
(2) The mobile terminal APP can access the call system through the Internet, which can reduce the problem that the number of users in the call system is limited because of the limited wireless channel resources of the wireless intercom system, that is, increase the user capacity of the call system. The newly-added mobile terminal APP can realize wide-area access equivalent to proprietary wireless belt packs, and its flexibility and scalability are greatly enhanced.
(3) The management of the whole call system, such as group management, voice parameter configuration, user registration, can be realized through the mobile terminal APP with management authority, which increases the management mode of the call system and makes the management of the call system more flexible.

Further, the embodiments of the present disclosure provide a wireless host device. The host device is wirelessly connected to a plurality of terminal devices, the host device is in communication connection with a cloud server based on an Internet protocol, and the cloud server is in communication connection with a plurality of clients.

The host device is configured to receive first voice signals transmitted by a plurality of terminal devices and second voice signals transmitted by the plurality of clients forwarded by the cloud server, and perform mixing processing on the first voice signals and the second voice signals to respectively generate a mixed signal corresponding to each of the terminal devices and a mixed signal corresponding to each of the clients. The host device is further configured to transmit the mixed signal corresponding to each of the terminal devices to the terminal device, and forward the mixed signal corresponding to each of the clients to the client through the cloud server.

The specific structure and function of the host device can refer to descriptions in the above embodiments, and will not be repeated here.

In addition, the embodiments of the present disclosure provide a call system, including a host device, a plurality of terminal devices, a cloud server and a plurality of clients, wherein the host device and the terminal devices are in a same wireless access network, the host device and the clients respectively establish connection channels with the cloud server through Internet;
the terminal devices are configured to obtain first voice signals and transmit the first voice signals to the host device;
the clients are configured to obtain second voice signals and transmit the second voice signals to the cloud server;
the cloud server is configured to receive the second voice signals and forward the second voice signals to the host device; and
the host device is configured to receive the first voice signals and the second voice signals, perform mixing processing on the first voice signals and the second voice signals to generate a mixed signal corresponding to one of the terminal devices and transmit the mixed signal to the terminal device, and to generate a mixed signal corresponding to one of the clients and forward the mixed signal to the client through the cloud server.

In addition, the embodiments of the present disclosure provide a computer program product. The computer program product is integrated on a first mobile terminal, the first mobile terminal, a plurality of second mobile terminals and a host device respectively establish connection channels with a cloud server through Internet, and the host device and a plurality of terminal devices are in a same wireless access network;
when the computer program product is executed by the first mobile terminal, the following steps can be implemented:
obtaining a second voice signal acquired by the first mobile terminal and transmitting the second voice signal to the cloud server to enable the cloud server to forward the second voice signal acquired by the first mobile terminal to the host device; and
receiving a mixed signal transmitted by the host device, wherein the mixed signal is generated by the host device after perform mixing processing on first voice signals transmitted by the terminal devices and second voice signals acquired by the second mobile terminals.

In addition, the embodiments of the present disclosure further provide a mobile terminal. The mobile terminal, a plurality of other mobile terminals except the mobile terminal and a host device respectively establish connection channels with a cloud server through Internet, the host device and a plurality of terminal devices are in a same wireless access network, the mobile terminal includes a processor, a memory and a computer program stored in the memory for the processor to execute, and when the processor executes the computer program, the following steps are implemented:
obtaining a second voice signal acquired by the mobile terminal and transmitting the second voice signal to the cloud server to enable the cloud server to forward the second voice signal acquired by the mobile terminal to the host device; and
receiving a mixed signal transmitted by the host device, wherein the mixed signal is generated by the host device after perform mixing processing on first voice signals transmitted by the terminal devices and second voice signals acquired by the other mobile terminals.

In addition, the embodiments of the present disclosure further provide a computer-readable storage medium. A computer program is stored on the storage medium, and when the computer program is executed, the following steps are implemented:
obtaining a second voice signal acquired by a mobile terminal and transmitting the second voice signal to a cloud server to enable the cloud server to forward the second voice signal acquired by the mobile terminal to a host device; and
receiving a mixed signal transmitted by the host device, wherein the mixed signal is generated by the host device after perform mixing processing on first voice signals transmitted by a plurality of terminal devices and second voice signals acquired by other mobile terminals except for the mobile terminal.

In addition, the embodiments of the present disclosure further provide a computer program product. The computer program product is integrated on a cloud server, the cloud server respectively establishes connection channels with a host device and a plurality of clients through Internet, and the host device and a plurality of terminal devices are in a same wireless access network;
when the computer program product is executed by the cloud server, the following steps are implemented:
receiving second voice signals transmitted by the clients;
forwarding the second voice signals to the host device to enable the host device to perform mixing processing on first voice signals and the second voice signals transmitted by the terminal devices to generate a mixed signal corresponding to one of the clients; and
receiving the mixed signal corresponding to one of the clients and forwarding the mixed signal to the client.

In addition, the embodiments of the present disclosure further provide a cloud server. The cloud server respectively establishes connection channels with a host device and a plurality of clients through Internet, the host device and a plurality of terminal devices are in a same wireless access network, a computer program is stored on the cloud server, and when the computer program is executed, the following steps are implemented:
receiving second voice signals transmitted by the clients;
forwarding the second voice signals to the host device to enable the host device to perform mixing processing on first voice signals transmitted by the terminal devices and the second voice signals to generate a mixed signal corresponding to one of the clients; and
receiving the mixed signal corresponding to one of the clients and forwarding the mixed signal to the client.

In addition, the embodiments of the present disclosure further provide a computer-readable storage medium. A computer program is stored on the storage medium, and when the computer program is executed, the following steps are implemented:
receiving second voice signals transmitted by a plurality of clients;
forwarding the second voice signals to a host device to enable the host device to perform mixing processing on first voice signals transmitted by a plurality of terminal devices and the second voice signals to generate a mixed signal corresponding to one of the clients; and
receiving the mixed signal corresponding to one of the clients and forwarding the mixed signal to the client.

The various technical features in the above embodiments can be combined arbitrarily, as long as there is no conflict or contradiction between the combinations of features. Due to space limitations, the combinations of features are not described one by one. Therefore, the various technical features in the above embodiments combined arbitrarily also belong to the scope of the present disclosure.

Those skilled in the art will easily think of other embodiments of the present disclosure after considering the specification and practicing the present disclosure disclosed herein. The present disclosure is intended to cover any variations, uses, or adaptive changes of the present disclosure. These variations, uses, or adaptive changes follow the general principles of the present disclosure and include common knowledge or conventional technical means in the technical field that are not disclosed in the present disclosure. The description and the embodiments are to be regarded as being exemplary only, and the true scope and spirit of the present disclosure are specified by the following claims.

It will be appreciated that the present disclosure is not limited to the exact construction that has been described above and illustrated in the accompanying drawings, and that various modifications and changes can be made without departing from the scope thereof. It is intended that the scope of the present disclosure shall only be limited by the appended claims.

The above are only the embodiments of the present disclosure and are not used to limit the present disclosure. Any modification, equivalent replacement, improvement, etc. made within the spirit and principle of the present disclosure may be included in the protection scope of the present disclosure.

## Claims

1. A call system, comprising a host device, a cloud server and a plurality of clients, wherein the host device and a plurality of terminal devices are in a same wireless access network, the host device and the clients respectively establish connection channels with the cloud server via an Internet;
the terminal devices are configured to obtain first voice signals and transmit the first voice signals to the host device;
the clients are configured to obtain second voice signals and transmit the second voice signals to the cloud server;
the cloud server is configured to receive the second voice signals and forward the second voice signals to the host device; and
the host device is configured to receive the first voice signals and the second voice signals, perform mixing processing on the first voice signals and the second voice signals to generate a mixed signal corresponding to one of the terminal devices and transmit the mixed signal to the terminal device, and to generate a mixed signal corresponding to one of the clients and forward the mixed signal to the client through the cloud server.

2. The call system according to claim 1, wherein the host device is further configured to perform coding processing on the mixed signal corresponding to one of the clients by using a low-loss and low-delay coding technology, and forward a coded mixed signal to the client through the cloud server, wherein the low-loss and low-delay coding technology comprises one or more of an OPUS coding technology, a Speex coding technology, an internet low bitrate codec (ILBC) coding technology, an internet speech audio codec (ISAC) coding technology and a super-wideband internet low bitrate codec (SILK) coding technology.

3. The call system according to claim 1 or 2, wherein the host device comprises a plurality of coding and decoding channels, and each of the plurality of coding and decoding channels corresponds to one of the clients and is configured to perform decoding processing on a second voice signal transmitted by the client, perform mixing processing on the decoded second voice signal with a first voice signal, perform coding processing on the mixed signal corresponding to the client and forward the coded signal to the client through the cloud server.

4. The call system according to claim 1, wherein the host device is further configured to encapsulate the mixed signal corresponding to one of the clients based on a voice over internet protocol and transmit the encapsulated mixed signal to the cloud server.

5. The call system according to claim 1, wherein the host device comprises a communication module, a coding and decoding module and a mixing processing module,
the communication module is configured to receive the first voice signals and the second voice signals, transmit the first voice signals and the second voice signals to the mixing processing module, receive the mixed signal corresponding to one of the terminal devices transmitted by the mixing processing module and transmit the mixed signal to the terminal device, and receive the mixed signal corresponding to one of the clients transmitted by the mixing processing module and transmit the mixed signal to the client;
the coding and decoding module is configured to decode the second voice signals and transmit the decoded second voice signals to the mixing processing module; and receive the mixed signal corresponding to one of the clients transmitted by the mixing processing module and perform coding processing on the mixed signal to transmit the coded mixed signal to the cloud server; and
the mixing processing module is configured to perform mixing processing on the first voice signals and the second voice signals to generate the mixed signal corresponding to one of the terminal devices and the mixed signal corresponding to one of the clients.

6. The call system according to claim 5, wherein the coding and decoding module is integrated on a central processing unit (CPU) of the host device, or the coding and decoding module is integrated on one or more daughter cards connected to the CPU of the host device through a hardware interface.

7. The call system according to claim 6, wherein a number of the daughter cards is determined based on a number of the plurality of clients.

8. The call system according to claim 5, wherein the mixing processing module is integrated on a digital signal processor (DSP) chip or a field programmable gate array (FPGA) chip.

9. The call system according to claim 5, wherein the plurality of terminal devices and the plurality of clients are divided into a plurality of groups, and the mixing processing module comprises a plurality of mixing processing modules, each of the plurality of mixing processing modules corresponds to one of the plurality of groups and is configured to perform mixing processing on the first voice signals transmitted by the terminal devices and the second voice signals transmitted by the clients in the group.

10. The call system according to claim 5, wherein voice signals transmitted between the mixing processing module and the coding and decoding module are pulse code modulation voice signals.

11. The call system according to claim 1, further comprising a plurality of terminal devices, wherein each of the plurality of terminal devices is connected to a voice acquisition and playback device and is configured to transmit a first voice signal acquired by the voice acquisition and playback device to the host device, and receive a mixed signal transmitted by the host device and play the mixed signal through the voice acquisition and playback device.

12. The call system according to claim 1, further comprising a plurality of wireless forwarding devices, wherein each of the plurality of wireless forwarding devices and a plurality of terminal devices are located in a same wireless access subnet, and the wireless forwarding device is connected to the host device via an Ethernet, and
the wireless forwarding device is configured to receive voice signals acquired by the plurality of terminal devices and forward the voice signals to the host device, and receive mixed signals transmitted by the host device with each of the plurality of terminal devices and forward the mixed signals to the terminal device.

13. The call system according to claim 1, wherein each of the plurality of clients is an application (APP) installed on a mobile terminal.

14. The call system according to claim 1, wherein the plurality of terminal devices and the plurality of clients are divided into a plurality of groups,
before transmitting the second voice signals to the host device through the cloud server, each of the plurality of clients is further configured to send a request to join a target group to the cloud server, wherein the request carries a group identifier of the target group; and
the cloud server is configured to add the client to the target group based on the group identifier of the target group, or forward the request to the host device to enable the host device to add the client to the target group based on the group identifier of the target group.

15. The call system according to claim 1, wherein a designated clients of the plurality of clients are further configured to send one or more management requests to the cloud server, and the cloud server is further configured to perform one or more management operations corresponding to the management requests on the call system, or the cloud server is further configured to forward the management requests to the host device to enable the host device to perform the management operations corresponding to the management requests on the call system.

16. The call system according to claim 15, wherein the management operations comprise one or more of an operation of group management for the plurality of clients or the plurality of terminal devices, an operation of configuring voice parameters of the call system and an operation of adding registered users.

17. The call system according to claim 1, wherein the cloud server is further configured to receive the second voice signals transmitted by the plurality of clients, mix the second voice signals into one voice signal, and transmit the one voice signal to the host device.

18. A host device, wherein the host device and a plurality of terminal devices are in a same wireless access network, the host device and a plurality of clients respectively establish connection channels with a cloud server via an Internet;
the host device is configured to receive first voice signals transmitted by the terminal devices and second voice signals transmitted by the clients forwarded by the cloud server, perform mixing processing on the first voice signals and the second voice signals to respectively generate a mixed signal corresponding to one of the terminal devices and transmit the mixed signal to the terminal device, and to generate a mixed signal corresponding to one of the clients and forward the mixed signal to the client through the cloud server.

19. The host device according to claim 1, wherein the host device is further configured to perform coding processing on the mixed signal corresponding to one of the clients by using a low-loss and low-delay coding technology, and forward a coded mixed signal to the client through the cloud server, wherein the low-loss and low-delay coding technology comprises an OPUS coding technology.

20. The host device according to claim 18 or 19, wherein the host device comprises a plurality of coding and decoding channels, and each of the plurality of coding and decoding channels corresponds to one of the clients and is configured to perform decoding processing on a second voice signal transmitted by the client, perform mixing processing on the decoded second voice signal with a first voice signal, perform coding processing on the mixed signal corresponding to the client and forward the coded signal to the client through the cloud server.

21. The host device according to claim 18, wherein the host device is further configured to encapsulate the mixed signal corresponding to one of the clients based on a voice over internet protocol, and transmit the encapsulated mixed signal to the cloud server.

22. The host device according to claim 18, wherein the host device comprises a communication module, a coding and decoding module and a mixing processing module,
the communication module is configured to receive the first voice signals and the second voice signals, transmit the first voice signals and the second voice signals to the mixing processing module, receive the mixed signal corresponding to one of the terminal devices transmitted by the mixing processing module and transmit the mixed signal to the terminal device, and receive the mixed signal corresponding to one of the clients transmitted by the mixing processing module and transmit the mixed signal to the client;
the coding and decoding module is configured to decode the second voice signals and transmit the decoded second voice signals to the mixing processing module; and receive the mixed signal corresponding to one of the clients transmitted by the mixing processing module and perform coding processing on the mixed signal to transmit the coded mixed signal to the cloud server; and
the mixing processing module is configured to perform mixing processing on the first voice signals and the second voice signals to generate the mixed signal corresponding to one of the terminal devices and the mixed signal corresponding to one of the clients.

23. The host device according to claim 22, wherein the coding and decoding module is integrated on a central processing unit (CPU) of the host device, or the coding and decoding module is integrated on one or more daughter cards connected to the CPU of the host device through a hardware interface.

24. The host device according to claim 22, wherein a number of the daughter cards is determined based on a number of the plurality of clients.

25. The host device according to claim 22, wherein the mixing processing module is integrated on a digital signal processor (DSP) chip or a field programmable gate array (FPGA) chip.

26. The host device according to claim 22, wherein the plurality of terminal devices and the plurality of clients are divided into a plurality of groups, and the mixing processing module comprises a plurality of mixing processing modules, each of the plurality of mixing processing modules corresponds to one of the plurality of groups and is configured to perform mixing processing on the first voice signals transmitted by the terminal devices and the second voice signals transmitted by the clients in the group.

27. The host device according to claim 22, wherein voice signals transmitted between the mixing processing module and the coding and decoding module are pulse code modulation voice signals.

28. A call system, comprising a host device, a plurality of terminal devices, a cloud server and a plurality of clients, wherein the host device and the terminal devices are in a same wireless access network, the host device and the clients respectively establish connection channels with the cloud server via an Internet;
the terminal devices are configured to obtain first voice signals and transmit the first voice signals to the host device;
the clients are configured to obtain second voice signals and transmit the second voice signals to the cloud server;
the cloud server is configured to receive the second voice signals and forward the second voice signals to the host device; and
the host device is configured to receive the first voice signals and the second voice signals, perform mixing processing on the first voice signals and the second voice signals to generate a mixed signal corresponding to one of the terminal devices and transmit the mixed signal to the terminal device, and to generate a mixed signal corresponding to one of the clients and forward the mixed signal to the client through the cloud server.

29. A computer program product, wherein the computer program product is integrated on a first mobile terminal, the first mobile terminal, a plurality of second mobile terminals and a host device respectively establish connection channels with a cloud server via an Internet, and the host device and a plurality of terminal devices are in a same wireless access network;
when the computer program product is executed by the first mobile terminal, the following steps are implemented:
obtaining a second voice signal acquired by the first mobile terminal and transmitting the second voice signal to the cloud server to enable the cloud server to forward the second voice signal acquired by the first mobile terminal to the host device; and
receiving a mixed signal transmitted by the host device, wherein the mixed signal is generated by the host device after perform mixing processing on first voice signals transmitted by the terminal devices and second voice signals acquired by the second mobile terminals.

30. A mobile terminal, wherein the mobile terminal, a plurality of other mobile terminals except the mobile terminal and a host device respectively establish connection channels with a cloud server via an Internet, the host device and a plurality of terminal devices are in a same wireless access network, the mobile terminal comprises a processor, a memory and a computer program stored in the memory for the processor to execute, and when the processor executes the computer program, the following steps are implemented:
obtaining a second voice signal acquired by the mobile terminal and transmitting the second voice signal to the cloud server to enable the cloud server to forward the second voice signal acquired by the mobile terminal to the host device; and
receiving a mixed signal transmitted by the host device, wherein the mixed signal is generated by the host device after perform mixing processing on first voice signals transmitted by the terminal devices and second voice signals acquired by the other mobile terminals.

31. A computer-readable storage medium, wherein a computer program is stored on the storage medium, and when the computer program is executed, the following steps are implemented:
obtaining a second voice signal acquired by a mobile terminal and transmitting the second voice signal to a cloud server to enable the cloud server to forward the second voice signal acquired by the mobile terminal to a host device; and
receiving a mixed signal transmitted by the host device, wherein the mixed signal is generated by the host device after perform mixing processing on first voice signals transmitted by a plurality of terminal devices and second voice signals acquired by other mobile terminals except for the mobile terminal.

32. A computer program product, wherein the computer program product is integrated on a cloud server, the cloud server respectively establishes connection channels with a host device and a plurality of clients via an Internet, and the host device and a plurality of terminal devices are in a same wireless access network;
when the computer program product is executed by the cloud server, the following steps are implemented:
receiving second voice signals transmitted by the clients;
forwarding the second voice signals to the host device to enable the host device to perform mixing processing on first voice signals and the second voice signals transmitted by the terminal devices to generate a mixed signal corresponding to one of the clients; and
receiving the mixed signal corresponding to one of the clients and forwarding the mixed signal to the client.

33. A cloud server, wherein the cloud server respectively establishes connection channels with a host device and a plurality of clients via an Internet, the host device and a plurality of terminal devices are in a same wireless access network, a computer program is stored on the cloud server, and when the computer program is executed, the following steps are implemented:
receiving second voice signals transmitted by the clients;
forwarding the second voice signals to the host device to enable the host device to perform mixing processing on first voice signals transmitted by the terminal devices and the second voice signals to generate a mixed signal corresponding to one of the clients; and
receiving the mixed signal corresponding to one of the clients and forwarding the mixed signal to the client.

34. A computer-readable storage medium, wherein a computer program is stored on the storage medium, and when the computer program is executed, the following steps are implemented:
receiving second voice signals transmitted by a plurality of clients;
forwarding the second voice signals to a host device to enable the host device to perform mixing processing on first voice signals transmitted by a plurality of terminal devices and the second voice signals to generate a mixed signal corresponding to one of the clients; and
receiving the mixed signal corresponding to one of the clients and forwarding the mixed signal to the client.
